# EUROPEAN PATENT APPLICATION

(11) **EP 1 691 357 A1**
(43) Date of publication of application: **16.08.2006**
(21) Application number: 04819903.8
(22) Date of filing: 02.12.2004
(51) Int. Cl.: G11B 7/09, G11B 7/085, G11B 7/12

(54) **OPTICAL DISK DRIVING DEVICE**

(30) Priority: 03.12.2003 JP 2003404153
(71) Applicant: MATSUSHITA ELECTRIC INDUSTRIAL CO., LTD., Kadoma-shi, Osaka 571-8501 (JP)
(72) Inventor: WADA, Takuya, Yawata-shi, Kyoto (JP); NAKAMURA, Tohru, Katano-shi, Osaka (JP); AIKOH, Hideki, Higashiosaka-shi, Osaka (JP); HAYASHI, Takao, Toyonaka-shi, Osaka (JP); MIZUNO, Osamu, Osaka-shi, Osaka (JP)
(74) Representative: TBK-Patent
(86) International application number: PCT/JP2004/017954
(87) International publication number: WO 2005/055215

(57) **Abstract**

A collision preventive member 9 that limits displacements of an objective lens 1 in a focusing direction F is provided. The collision preventive member 9 includes a first limiting portion 9f that limits displacements of the objective lens 1 present within a first region A1 while allowing a movable range of the objective lens 1 in the focusing direction F to overlap a deflection range of the optical disc within the first region A1, and a second limiting portion 9g that limits displacements of the objective lens 1 present within a second region A2 in establishing a relation such that the movable range of the objective lens 1 in the focusing direction F does not overlap the deflection range of the optical disc within the second region A2. A controller that controls the objective lens 1 in such a manner that the objective lens 1 is located within the second region A2 in a non-focusing state of the objective lens 1 is provided. It is thus possible to prevent a collision between an optical disc and the objective lens under the environment where vibrations are applied.

## Description

### TECHNICAL FIELD

The present invention relates to an optical disc driving device that applies optical information processing, such as recording and playing back of information, to a disc-shaped recording medium, that is, an optical disc, such as a CD and a DVD, and more particularly, to a technique of preventing a collision between an optical disc and an objective lens in a non-operating state.

### BACKGROUND ART

An optical disc driving device is provided with an optical head that optically records information in or plays back information from an optical disc, such as a CD and a DVD. The optical head is incorporated to be movable in parallel with the optical disc in a radius direction of the optical disc. In order to correct focusing displacements due to vertical motions of an optical disc resulted from warpage or tracking displacements due to decentering of the optical disc, an objective lens is driven in a direction perpendicular to the optical disc, which is an optical axis direction of the objective lens (hereinafter, referred to as the focusing direction) and in a predetermined radius direction of the optical disc (hereinafter, referred to as the tracking direction).

In the case of a portable CD player and a DVD player installed in a vehicle, vibrations or impacts induced by an external force or the like are applied from the outside to the optical disc driving device including such an optical head. In order to prevent damages on the optical disc and the objective lens resulted from a collision of the objective lens with the optical disc, a type provided with limiting means for limiting motions of the objective lens has been disclosed, for example, in Patent Document 1.

An optical disc driving device in the background art will now be described. FIG. 13 is a perspective view showing the optical disc driving device in the background art. FIG. 14 is an enlarged view of an optical head. FIG. 15 and FIG. 16 are schematic views when viewed from the side.

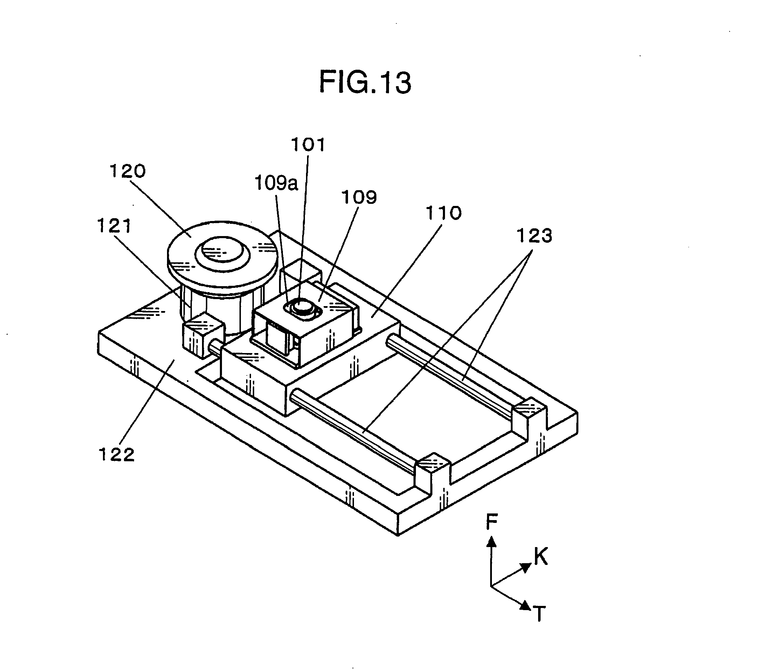

Referring to FIG. 13 through FIG. 16, a capital F indicates the focusing direction, a capital T indicates the tracking direction, and a capital K indicates a tangential direction (a direction perpendicular to T and F). F, T, and K are orthogonal with respect to one another, and they are equivalent to respective coordinate axes in the 3-D orthogonal coordinate system.

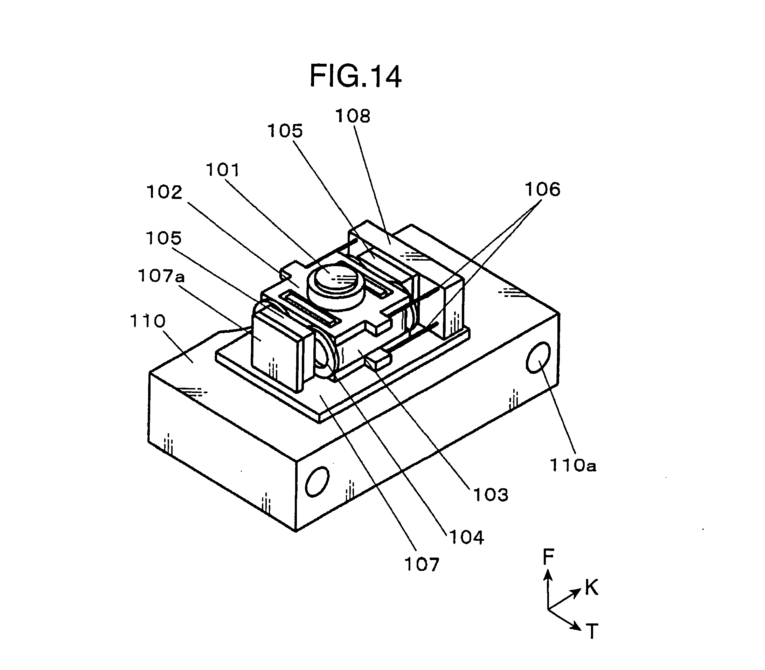

As is shown in FIG. 14, an objective lens 101 is fixed to a lens holder 102. A focusing coil 103 using the focusing direction F as the winding axis and a tracking coil 104 using the tangential direction K as the winding axis are fixed to the lens holder 102. The lens holder 102 is supported on a fixing member 108 by means of four supporting members 106 comprising elastic bodies, and is movable in the tracking direction T and in the focusing direction F. Two magnets 105 are placed immovably to yokes 107a that form an integral part of a yoke base 107.

Although it is not shown in the drawing, an optical base 110 is provided with a light-emitting element that irradiates a laser beam to an optical disc 150, and a light-receiving element that receives reflected light from the optical disc 150 and converts the reflected light to an electric signal.

As is shown in FIG. 13, a spindle motor 121 and guiding shafts 123 are fixed to a traverse base 122. A turn table 120, on which the optical disc 150 is placed, is fixed to the spindle motor 121. The optical base 110 is provided with holes 110a through which the guiding shafts 123 are inserted. Unillustrated moving means allows the optical head to move with respect to the traverse base 122 in the tracking direction T, which is the radius direction of a disc.

Operations of the optical disc driving device configured as described above will now be described. The yokes 107a and the magnets 105 allow a magnetic flux in the tangential direction K to pass through the focus coil 103. When a current passes through the focus coil 103, an electromagnetic force is generated in the focusing direction F. This enables the objective lens 101 to perform the focusing operation by moving vertically in the focusing direction F.

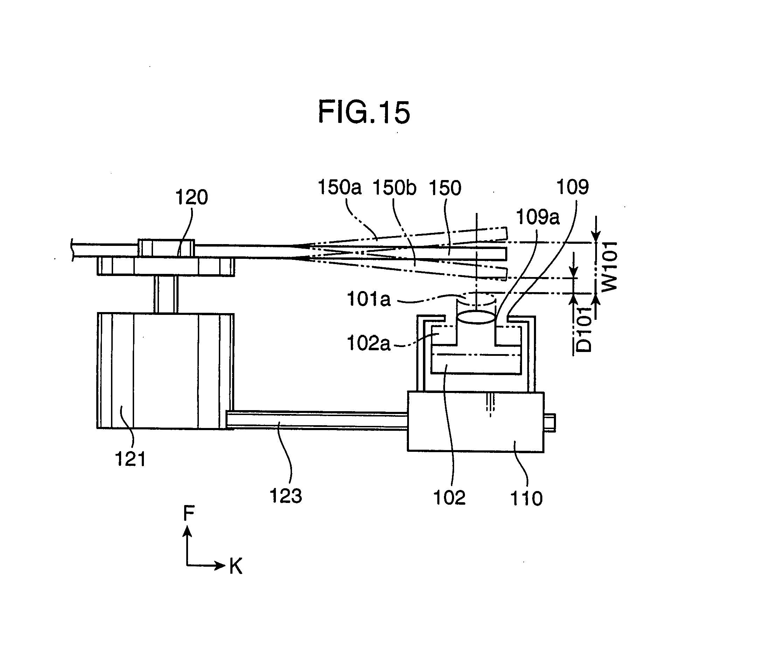

As are shown in FIG. 13 and FIG. 15, the optical base 110 is provided with a collision preventive cover 109 that prevents a collision between the optical disc 150 and the objective lens 101. The collision preventive cover 109 is provided with a hole 109a from and in which the lens holder 102, to which the objective lens 101 is fixed, protrudes and collapse.

In the optical disc driving device in the background art using a CD or a DVD, deflection of an optical disc is on the order of 0.5 mm, and a working distance of the objective lens is on the order of 1.2 mm. Deflection referred to herein is defined as a quantity of displacements of an optical disc in comparison with a state in the absence of deflection, that is, a quantity of side-deflection.

As is shown in FIG. 15, assume that the optical disc 150 is now located, due to deflection, at the uppermost position 150a, which is 0.5 mm higher than the reference height, while the objective lens 101 is located at the uppermost position 101a as a result of the focusing operation, then 1.2 mm is left as an interval (working distance) W101 between the optical disc 150a and the top surface of the objective lens 101a. Hence, 0.1 mm is left as a clearance between the lens holder 102 at the uppermost position 102a and the collision preventive cover.

Because the lens holder 102 is supported movably in the focusing direction F on the supporting members 106, the lens holder 102 is free to move in response to vibrations from the outside when the optical head is in a non-operating state during which no current passes through the focusing coil 103. In a case where the optical disc 150 is located at the lowermost position 150b due to deflection, even when the lens holder 102 moves beyond the uppermost position 102a to a position at which it comes into contact with the collision preventive cover 109 due to vibrations from the outside during the non-operating state, 0.1 mm is left as an interval D101 between the optical disc 150 and the top surface of the objective lens 101. Hence, the optical disc 150 and the objective lens 101 will not come into contact with each other. The optical disc driving device is configured in such a manner that the objective lens 101 and the optical disc 150 will not come into contact with each other when the working distance of the objective lens 101 is more than twice a quantity of deflection of the optical disc 150 as described above.

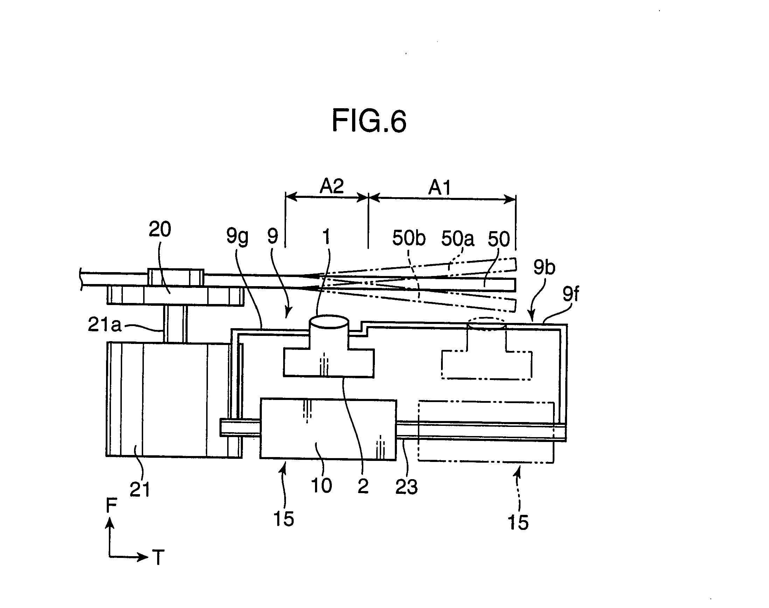

### [Patent Document 1] JP-A-61-182643 (FIG. 6)

### DISCLOSURE OF THE INVENTION

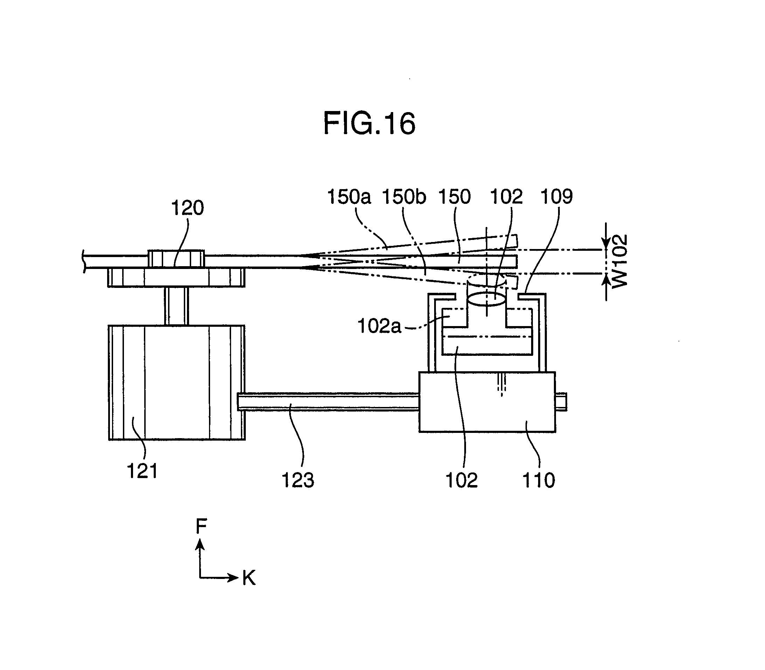

However, an optical disc is becoming denser in recent years, and the working distance of the objective lens is becoming shorter. For example, a high-density optical disc used in a case where a light source having a wavelength on the order of 400 nm is used, as is shown in FIG. 16, a working distance W102 of the objective lens is, for example, on the order of 0.3 mm. For an optical disc of this type, deflection is suppressed to be on the order of 0.3 mm by increasing the accuracy of molding. In other words, a working distance of the objective lens is less than twice a quantity of deflection of the disc. In this case, when the collision preventive cover 109 is provided so that it is aligned with the lens holder position (uppermost position) for the focusing operation in achieving the focus at the uppermost position of the optical disc, if the optical disc is located at the lowermost position 150b, the object lens 101 comes into contact with the optical disc 150 as the lens holder 102 is displaced to the uppermost position 102a. To be more specific, the optical disc 150 and the objective lens 101 will not collide with each other while the optical disc driving device is in an operating state, because the objective lens 101 is spaced apart from the optical disc 150 by the working distance W102 as a result of the focusing operation. However, while the optical head is in a non-operating state, the lens holder 102 supported by means of the supporting members 106 comprising elastic bodies possibly moves in the focusing direction F when vibrations or impacts are applied from the outside, and there is a risk of a collision between the optical disc 150 and the objective lens 101. In a case where the working distance W102 of the objective lens 101 is equal to or less than twice a quantity of deflection of the optical disc 150 as described above, the objective lens repetitively collides with the disc when the optical disc driving device is installed in environments, such as a vehicle, where vibrations or impacts are applied continuously. The optical disc and the objective lens are thereby damaged, which possibly makes it impossible to record information in and play back information from the optical disc.

The invention was devised to solve the problems discussed above, and therefore has an object to provide an optical disc driving device capable of preventing a collision between an optical disc and the objective lens under the environments where vibrations are applied.

The invention provides an optical disc driving device including an objective lens that collets light onto an optical disc, in which the objective lens is formed to be movable in a tracking direction of the optical disc across a first region and a second region inside the first region and to be movable in a focusing direction. A limiting member that limits displacements of the objective lens in the focusing direction is provided. The limiting member includes a first limiting portion that limits displacements of the objective lens present within the first region while allowing a movable range of the objective lens in the focusing direction to overlap a deflection range of the optical disc within the first region, and a second limiting portion that limits displacements of the objective lens present within the second region in establishing a relation such that the movable range of the objective lens in the focusing direction does not overlap the deflection range of the optical disc within the second region. A controller that controls the objective lens in such a manner that the objective lens is located within the second region in a non-focusing state of the objective lens is provided.

According to the optical disc driving device of the invention, even when a working distance of the objective lens for a high-density optical disc is shortened, it is possible to prevent the objective lens from colliding with the optical disc upon application of vibrations from the outside while the focusing control is not performed, which can in turn prevent damages on the high-density optical objective lens and the optical disc.

### BRIEF DESCRIPTION OF THE DRAWINGS

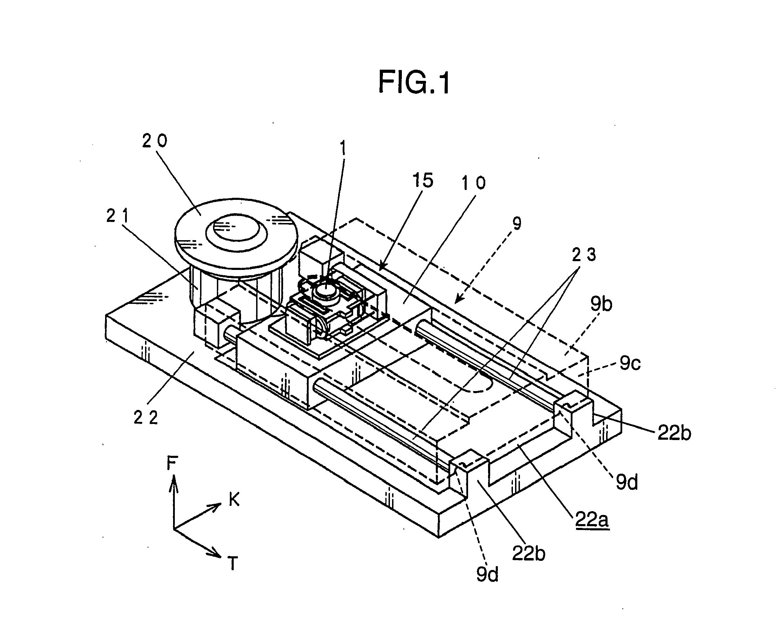

FIG. 1 is a perspective view showing an optical disc driving device according to a first embodiment of the invention;

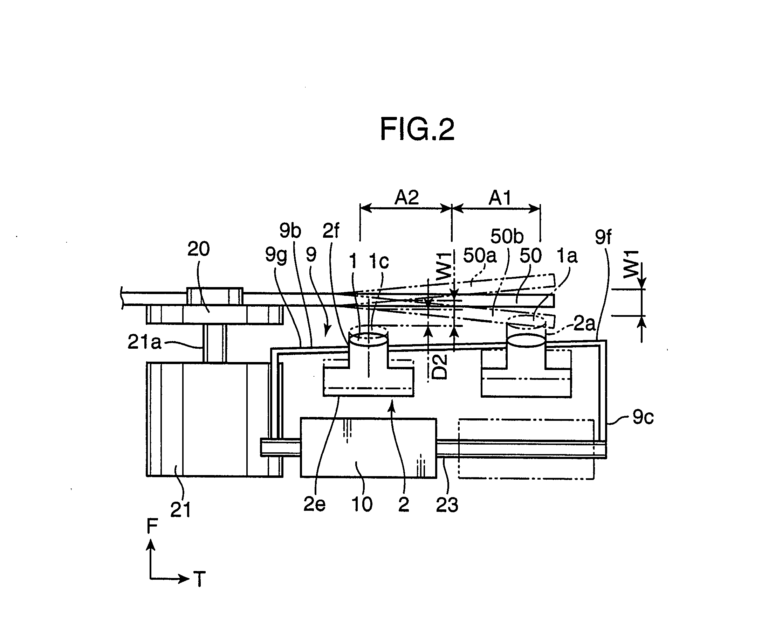

FIG. 2 is a schematic view of the optical disc driving device according to the first embodiment of the invention when viewed from the side;

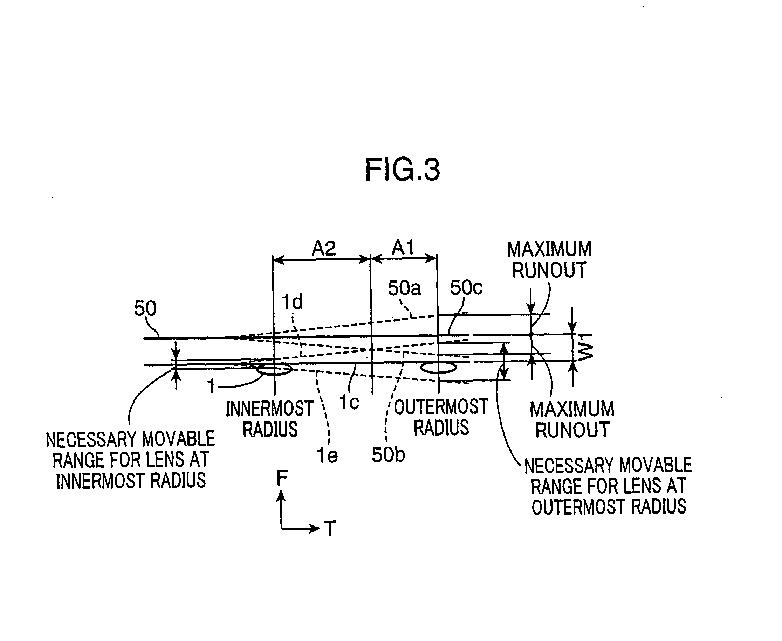

FIG. 3 is a view used to describe a first region and a second region;

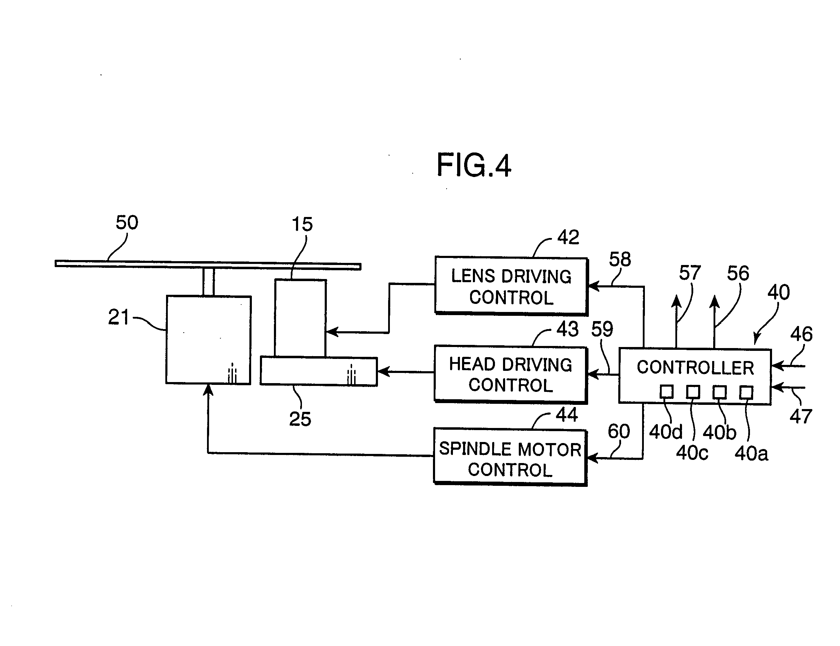

FIG. 4 is a block diagram showing the configuration of a control system in the optical disc driving device according to the first embodiment of the invention;

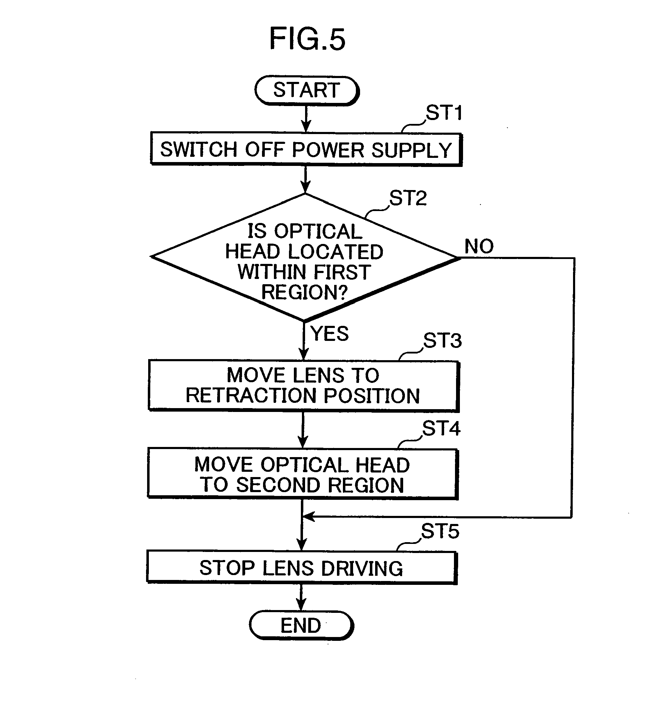

FIG. 5 is a flowchart showing a control operation of the optical disc driving device according to the first embodiment of the invention;
FIG. 6 is a schematic view of an optical disc driving device according to a second embodiment of the invention when viewed from the side;

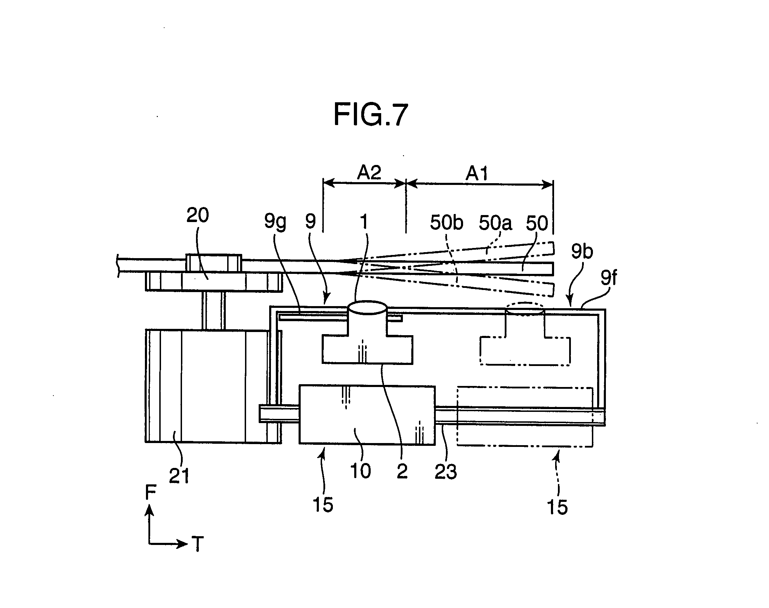

FIG. 7 is a view corresponding to FIG. 6 and showing an optical disc driving device according to a third embodiment of the invention;

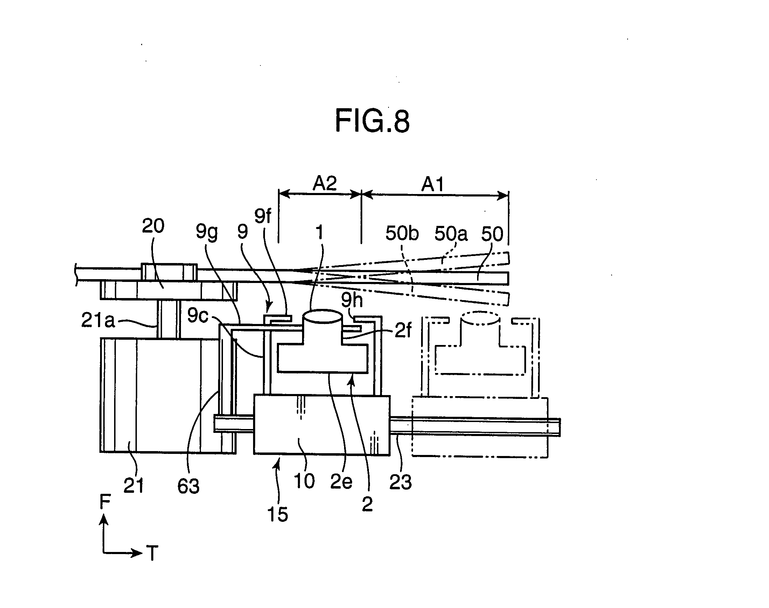

FIG. 8 is a view corresponding to FIG. 6 and showing an optical disc driving device according to a fourth embodiment of the invention;

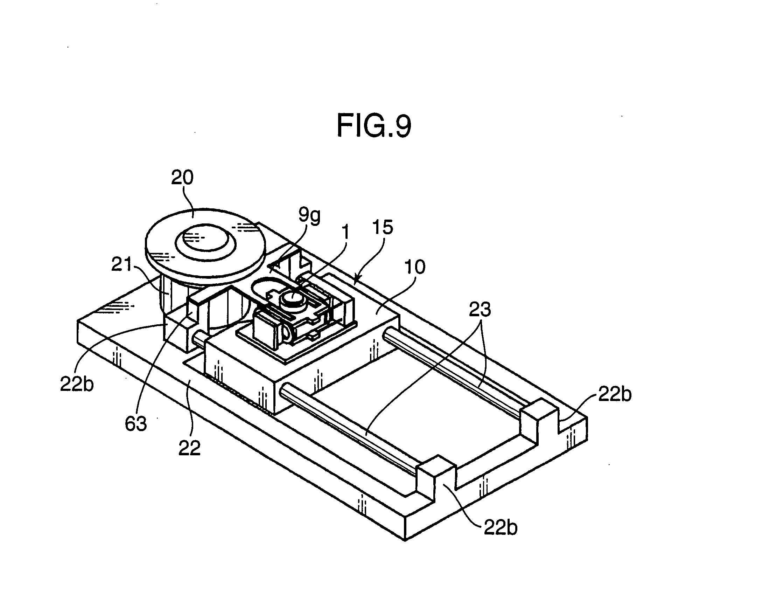

FIG. 9 is a perspective view of the optical disc driving device according to the fourth embodiment of the invention;

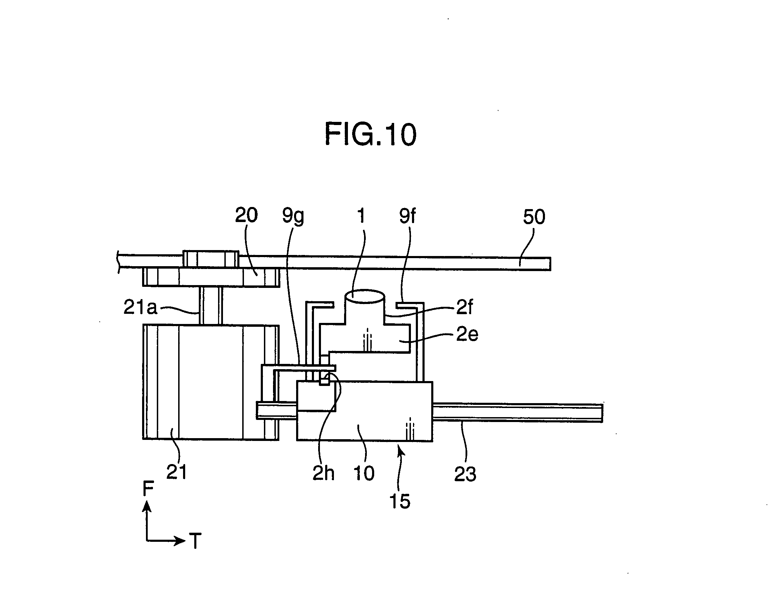

FIG. 10 is a schematic view showing a modification of the optical disc driving device according to the fourth embodiment of the invention;

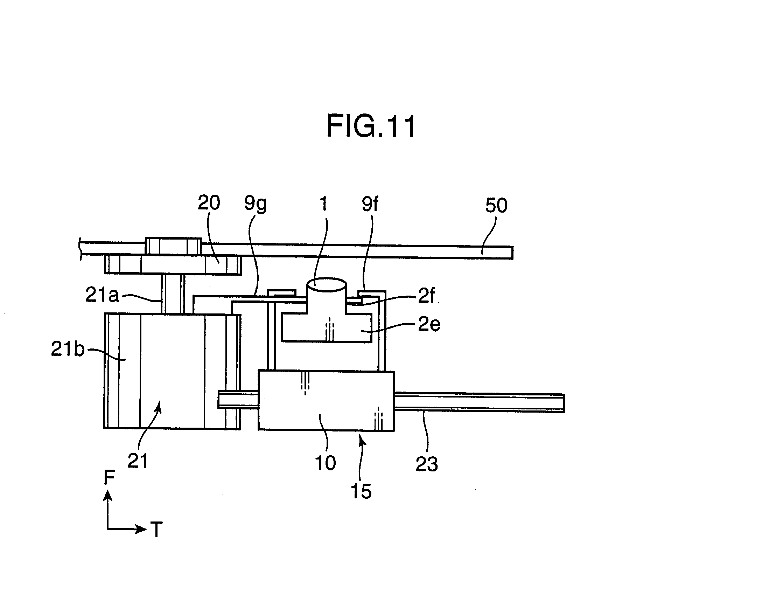

FIG. 11 is a schematic view showing another modification of the optical disc driving device according to the fourth embodiment of the invention;

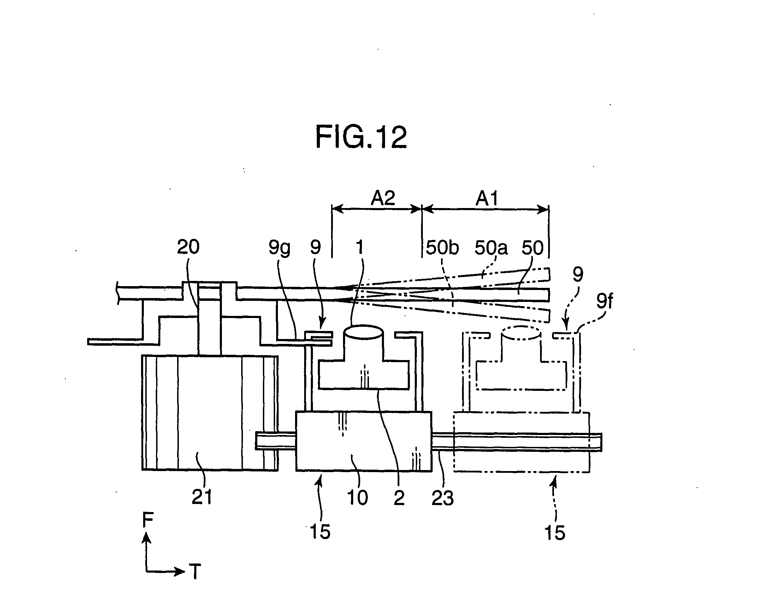

FIG. 12 a view corresponding to FIG. 6 and showing an optical disc driving device according to a fifth embodiment of the invention;
FIG. 13 is a perspective view showing an objective lens driving device in the background art;
FIG. 14 is a perspective view showing an enlarged major portion in the objective lens driving device in the background art;
FIG. 15 is a schematic view showing the objective lens driving device in the background art when viewed from the side; and
FIG. 16 is a schematic view showing the objective lens driving device in the background art when viewed from the side.

### BEST MODE FOR CARRYING OUT THE INVENTION

Hereinafter, embodiments of the invention will be described with reference to the drawings.

(First Embodiment)
FIG. 1 is a perspective view of an optical disc driving device according to a first embodiment of the invention. FIG. 2 is a schematic view of the optical disc driving device when viewed from the side.

Referring to FIG. 1 and FIG. 2, a capital F indicates a focusing direction that coincides with a direction orthogonal to the reference position of an optical disc, a capital T indicates a tracking direction that coincides with the radius direction of an optical disc, and a capital K indicates a tangential direction that coincides with a direction orthogonal to both the tracking direction T and the focusing direction F. These focusing direction F, tracking direction T, and tangential direction K are orthogonal with respect to one another, and are equivalent to respective coordinate axes in the 3-D orthogonal coordinate system.

The optical disc driving device includes a traverse base 22 as one example of a base of a shape that extends in a specific direction when viewed in a plane, a spindle motor 21 fixed to the traverse base 22, a turn table 20 used to rotate an optical disc, a pair of guiding shafts 23 supported on the traverse base 22, and an optical head 15 formed to be movable along the guiding shafts 23.

The optical head 15 includes an optical base 10, an unillustrated fixing member, unillustrated supporting members, an objective lens 1, and a lens holder 2. The fixing member is fixed to the optical base 10. The supporting members are formed of elastic bodies, and are supported on the fixing member at one end.

The lens holder 2 forms a holding member that holds the objective lens 1. The objective lens 1 is fixed to the lens holder 2, and thereby moves integrally with the lens holder 2.

A focusing coil (not shown) using the focusing direction F as the winding axis, and a tracking coil (not shown) using the tangential direction K as the winding axis are fixed to the lens holder 2. The lens holder 2 is linked to a free-end of each supporting member, and is formed to be movable in both the tracking direction T and the focusing direction F.

An unillustrated yoke base is fixed to the optical base 10, and unillustrated yokes are fixed to the yoke base. Two magnets are placed immovably to these yokes.

Although it is not shown in the drawing, the optical base 10 is provided with a light-emitting element that irradiates a laser beam to an optical disc, and a light-receiving element that receives reflected light from the optical disc and converts the reflected light into an electric signal or the like.

The configuration described above is the same as the configuration of the optical disc driving device shown in FIG. 11.

The spindle motor 21 is provided to the traverse base 22 at one end in the longitudinal direction. The turn table 20 is fixed to a driving shaft 21a of the spindle motor 21, and thereby rotates integrally with the driving shaft 21a.

The traverse base 22 is provided with an opening 22a that opens wide in the longitudinal direction, and supporting portions 22b that support the respective guiding shafts 23 are provided to stand on the both sides of the traverse base 22 with the opening portion 22a in between in the tracking direction T. Each guiding shaft 23 is provided to extend in parallel with the tracking direction T, and the both end portions are supported rotatably on the supporting portions 22b.

A pair of holes 10a, through which the respective guiding shafts 23 are inserted, are made in the side walls of the optical base 10, and the guiding shafts 23 penetrate through these holes 10a. Each guiding shaft 23 comprises a feed screw, and each guiding shaft 23 is able to move the optical base 10 in the tracking direction T when rotated by unillustrated driving means. The optical base 10 is movable in a range from the innermost radius to the outermost radius of an optical disc 50 while the lower end thereof is inserted within the opening portion 22a. These are configured in the same manner as their counterparts in the optical disc driving device in the background art shown in FIG. 10.

The optical head 15 is provided with a collision preventive member 9 as one example of a limiting member that limits displacements of the objective lens 1 in the focusing direction F. The collision preventive member 9 is shown in a broken line in FIG. 1 for convenience of illustration.

The collision preventive member 9 includes a rectangular top surface portion 9b and side wall portions 9c extending downward from the top surface portion 9b, and is provided in a region where it covers the opening portion 22a made in the traverse base 22. A long hole 9a is made in the top surface portion 9b of the collision preventive member 9, from and in which the objective lens 1 is allowed to protrude and collapse. The long hole 9a is of an elongated shape extending in the tracking direction T.

Arc-shaped notch portions 9d corresponding to the guiding shafts 23 are formed at the lower end of the side wall portions 9c of the collision preventive member 9. The notch portion 9d is provided for each guiding shaft 23. The collision preventive member 9 is positioned by fitting the guiding shafts 23 in the corresponding notch portions 9d.

As is shown in FIG. 2, the top surface portion 9b of the collision preventive member 9 comprises a first limiting portion 9f that limits displacements of the objective lens 1 present in a first region A1, and a second limiting portion 9g that limits displacements of the objective lens 1 present in a second region A2. In this embodiment, the first limiting portion 9f and the second limiting portion 9g are formed integrally, and the top surface portion 9b of the collision preventive member 9 is formed in a planar shape.

The top surface portion 9b of the collision preventive member 9 tilts with respect to the reference surface orthogonal to the rotational axis of the optical disc 50 (the driving shaft 21a of the spindle motor 21). In other words, the top surface portion 9b is formed to tilt with an increasing distance from the optical disc 50 on the inner side in the tracking direction T.

The lens holder 2 includes a main body portion 2e and a protrusion portion 2f protruding from the main body portion 2e. The objective lens 1 is fixed to the tip end of the protruding portion 2f. The main body portion 2e has a width too large for it to pass through the long hole 9a, while the protruding portion 2f has a width small enough for it to pass through the long hole 9a. When the lens holder 2 is displaced in the focusing direction F and comes closer to the optical disc 50, the protrusion portion 2f protrudes upward from the top surface portion 9b of the collision preventive member 9, while the main body portion 2e abuts on the top surface portion 9b of the collision preventive member 9. A quantity of displacements of the objective lens 1 in the focusing direction F is limited by this configuration.

A movable range of the objective lens 1 allowed by the collision preventive member 9 will now be described. As is shown in FIG. 3, the objective lens 1 is movable in the tracking direction T across the first region A1 and the second region A2. Referring to FIG. 3, the reference position 50c that coincides with a direction orthogonal to the rotational axis of the optical disc 50 is indicated by a solid line, and the uppermost position 50a at which the optical disc 50 is shifted upward and the lowermost position 50b at which the optical disc 50 is shifted downward due to deflection are indicated by broken lines. A movement trajectory 1c of the objective lens 1 in response to the reference position 50c of the optical disc 50 is indicated by a solid line, and movement trajectories 1d and 1e of the objective lens 1 in response to the uppermost position 50a and the lowermost position 50b of the optical disc 50, respectively, are indicated by broken lines.

When the optical disc 50 is warped, deflection occurs in association with rotations of the optical disc 50. The amplitude of deflection is larger on the outer radius side. The amplitude of deflection can be expressed, for example, by linear approximation with respect to the tracking direction T, and reaches the maximum on the outermost radius side. Meanwhile, it is necessary for the objective lens 1 to be able to move in the tracking direction T while keeping a constant working distance W1 from the optical disc 50. Hence, as is shown in FIG. 3, the necessary movable range of the objective lens 1 needs to be larger on the outer side in the tracking direction T and smaller on the inner side in the tracking direction T. More specifically, assume that the optical disc 50 is present at the uppermost position 50a, then the objective lens 1 is farther from the reference position 50c of the optical disc 50 when it is on the inner side in the tracking direction T, and comes closer to the reference position 50c of the optical disc 50 when it is on the outer side in the tracking direction T. Hence, even when the collision preventive member 9 tilts with an increasing distance from the optical disc 50 on the inner side in the tracking direction T, it is possible to prevent a collision between the lens holder 2 and the collision preventive member 9 while ensuring the movable range of the objective lens 1.

The first limiting portion 9f limits displacements of the objective lens 1 present within the first region A1 while allowing the movable range of the objective lens 1 in the focusing direction F to overlap the deflection range of the optical disc 50 within the first region A1. Meanwhile, the second limiting portion 9g limits displacements of the objective lens 1 present within the second region A2 in establishing a relation such that the movable range of the objective lens 1 in the focusing direction F will not overlap the deflection range of the optical disc 50 within the second region A2.

A concrete example of the positional relation among the optical disc, the collision preventive member 9, the objective lens 1, and the optical head 15 will now be described with reference to FIG. 2. Referring to FIG. 2, for ease of illustration, the optical head 15 is shown in a solid line both when the optical head 15 is present within the first region A1 and when the optical head 15 is present within the second region A2 in the absence of deflection of the optical disc. The lens holder 2 and the objective lens 1 in the presence of deflection of the optical disc are shown in virtual lines.

Assume that the objective lens 1 is present within the first region A1, when the optical disc 50 is located at the uppermost position 50a due to deflection, for example, when it has moved up, for example, by 0.3 mm from the reference position, the objective lens 1 is located at the uppermost position 1a as a result of the focusing operation. In this instance, the working distance W1, which is equivalent to an interval between the optical disc 50 and top surface of the objective lens 1, is, for example, 0.3 mm, and a clearance between the main body portion 2e of the lens holder 2 and the first limiting portion 9f of the collision preventive member 9 is, for example, 0.1 mm.

In a non-operating state of the optical head 15 during which no focusing operation is performed (non-focusing state), the lens holder 2 may possibly vibrate in the focusing direction F due to vibrations from the outside. Hence, when the optical disc 50 is located at the lowermost position 50b due to deflection while the optical head 15 is present within the first region A1, there is a possibility that the optical disc 50 and the objective lens 1 come into contact with each other if the lens holder 2 is located, due to vibrations, at the uppermost position 2a at which it abuts on the first limiting portion 9f of the collision preventive member 9.

On the other hand, as are shown in FIG. 2 and FIG. 3, deflection of the optical disc 50 reaches the maximum in the vicinity of the outer radius, and is almost 0 in close proximity to the turn table 20, that is, in the vicinity of the innermost radius in the information recording region of the optical disc 50. The top surface portion 9b of the collision preventive member 9 is not provided in parallel with the tracking direction T, which is the moving direction of the optical head 15; instead, it is provided in such a manner that a quantity of movements of the lens holder 2 is smaller on the inner radius side of the optical disc 50 in response to deflection of the optical disc 50. For example, the top surface portion 9b of the collision preventive member 9 is set so that it tilts to be almost parallel to the optical disc 50 located at the uppermost position 50a.

When the optical disc 50 is located at the uppermost position 50a due to deflection, upward displacements in the vicinity of the innermost radius of the optical disc 50 is, for example, 0.05 mm. In this instance, if the objective lens 1 is present in the vicinity of the innermost radius, which is within the second region A2, the objective lens 1 is located at the uppermost position 1c as a result of the focusing operation. An interval (working distance W1) between the optical disc 50 and the top surface of the objective lens 1 is therefore 0.3 mm as in the case where the objective lens 1 is present within the first region A1, and a clearance between the lens holder 2 and the second limiting portion 9g of the collision preventive member 9 in this instance is 0.1 mm. When the optical disc 50 is located at the lowermost position 50b in the non-operating state during which no focusing operation is performed, even if the lens holder 2 moves upward from the uppermost position to the position at which it abuts on the second limiting portion 9g, a clearance D2 of 0.1 (= 0.3 - 0.05 × 2 - 0.1) mm is left between the top surface of the objective lens 1 and the optical disc 50. The objective lens 1 and the optical disc 50 therefore will not collide with each other.

The configuration of a control system in the optical disc driving device will now be described.

As is shown in FIG. 4, the optical disc driving device includes a controller 40, a lens driving circuit 42 serving as an objective lens driving control portion, a head driving circuit 43 serving as an optical head driving control portion, and a motor driving circuit 44 serving as a spindle motor control portion.

The controller 40 receives a power supply ON request signal 46 and a power supply OFF request signal 47, and outputs a power supply ON signal 56, a power supply OFF signal 57, a lens control signal 58, a head control signal 59, and a motor control signal 60.

The power supply ON request signal 46 and the power supply OFF request signal 47 are inputted into the controller 40 through switch inputs made by the user.

The power supply OFF signal 57 and the power supply ON signal 56 are outputted to a power supply circuit (for example, a power supply control IC) or the like.

The lens control signal 58 is inputted into the lens driving circuit 42. Upon input of the lens control signal 58, the lens driving circuit 42 feeds a driving current according to the lens control signal 58 and moves the objective lens 1 to a target position.

The head control signal 59 is inputted into the head driving circuit 43. Upon input of the head control signal 59, the head driving circuit 43 feeds a driving current according to the head control signal 59 and moves the optical head 15 to the target position by controlling a quantity of rotations of the guiding shafts 23.

The motor control signal 60 is inputted into the motor driving circuit 44. Upon input of the motor control signal 60, the motor driving circuit 44 controls a quantity of rotations of the spindle motor 21.

The controller 40 functionally includes a focus control portion 40a, a tracking control portion 40b, a movement control portion 40c, and a retraction control portion 40d. The focus control portion 40a is a control portion that performs the focusing operation through which the objective lens 1 is adjusted to be at a desired focus position, and outputs the lens control signal 58. A distance between the objective lens 1 and the optical disc 50 is adjusted to be the working distance W1 through the focusing operation. The tracking control portion 40b is a control portion that performs the tracking control under which the optical head 15 is adjusted to be at a position at which it can access a desired track, and outputs the head control signal 59.

The movement control portion 40c is a control portion that performs control under which the optical head 15 present within the first region A1 is moved to the second region A2 upon input of the power supply OFF request signal, and outputs the head control signal 59.

The retraction control portion 40d is a control portion that performs control under which the focusing control is cancelled when the head 15 present within the first region A1 is moved to the second region A2, while the objective lens 1 present the working distance W1 away from the optical disc 50 is moved to a retraction position spaced apart from the optical disc 50, and it outputs the lens control signal 58.

Operations of the optical disc driving device configured in this manner will now be described with reference to FIG. 5. The focusing operation is the same as the focusing operation described with reference to the optical disc driving device in the background art.

Initially, the user switches OFF the power supply of the optical disc driving device (Step STI), and the controller 40 judges whether the optical head 15 is present within the first region A1 (Step ST2). The position of the optical head 15 is detected, for example, on the basis of a stored track number.

When the optical head 15 is within the first region A1, the flow proceeds to Step ST3, in which the objective lens 1 (lens holder 2) is moved to the retraction position. In this instance, the focusing operation is suspended temporarily. The retraction position referred to herein means a position at which the objective lens 1 is located away from the optical disc 50 by the working distance W1 secured under the focusing control plus a predetermined distance. That is to say, because the lens holder is moved from the first region A1 to the second region A2 as will be described below, the objective lens 1 is moved to the retraction position to prevent the lens holder 2 from interfering with the collision preventive member 9 in association with such movements.

Subsequently, the optical head 15 is moved to the second region A2 from the first region A1 (Step ST4), and the optical head 15 is stopped within the second region A2. Then, the focusing control of the objective lens 1 is stopped (Step ST5).

On the other hand, when the optical head 15 is judged to be present within the second region A2 in Step ST2, the focusing control of the objective lens 1 is stopped without performing Step ST3 and Step ST4.

As has been described, the optical head 15 is located within the second region A2 in a case where no focusing operation is performed such as the power supply switched OFF.

In a non-operating state of the optical head 15 during which no focusing operation is performed, the lens holder 2 supported movably in the focusing direction F is free to move due to vibrations from the outside. In the optical driving device of this embodiment, however, the objective lens 1 is present within the second region A2 during the non-focusing state. Hence, the movable range of the objective lens 1 is limited to an extremely narrow range by means of the second limiting portion 9g of the collision preventive member 9. Hence, even when the optical disc 50 is located at the lowermost position 50b due to deflection and the lens holder 2 vibrates due to vibrations from the outside and moves beyond the uppermost position to a position at which it comes into contact with the second limiting portion 9g of the collision preventive member 9, as has been described above, a clearance of about 0.1 mm is left between the optical disc 50 and the top surface of the objective lens 1. Hence, the objective lens 1 and the optical disc 50 will not come into contact with each other. In other words, when configured as in the background art that the collision preventive cover is fixed to the optical base, even if the objective lens is located at the innermost radius, there is a possibility that the objective lens collides with the optical disc when the objective lens 1 moves upward to the extent that it abuts on the collision preventive cover. On the contrary, in the invention, because the top surface portion 9b of the collision preventive member 9 is formed to tilt in a manner as described above, the movable range of the objective lens 1 within the second region A2 is limited to a narrow range. It is thus possible to avoid a collision between the objective lens 1 and the optical disc 50 in a reliable manner while maintaining the movable range of the objective lens 1.

In other words, in this embodiment, the limiting member is configured to limit displacements of the objective lens in such a manner that the movable range of the objective lens in the second region is smaller than the movable range of the objective lens in the first region.

In this embodiment, the limiting member tilts with respect to a direction orthogonal to the rotational axis of the optical disc with an increasing distance from the optical disc on the inner side in the tracking direction. When configured in this manner, advantages of the invention can be exerted effectively.

Further, in this embodiment, even when the objective lens 1 is present within the first region A1 when the focusing operation is stopped, the optical head 15 is controlled to be moved and held in the vicinity of the innermost radius in the information recording region of the optical disc 50 while the operating head 15 is in a non-operating state. Hence, even when the lens holder 2 vibrates, it abuts on the second limiting portion 9g of the collision preventive member 9, which prevents the objective lens 1 from coming into contact with the optical disc 50.

In this embodiment, the base, the optical base formed to be movable in the tracking direction with respect to the base and provided with the objective lens, and the guiding shafts provided to the base to guide the optical base in the tracking direction are provided, and the limiting member is supported on the guiding shafts.

When configured in this manner, because the limiting member is supported on the guiding shafts used as the positioning basis of the objective lens, it is possible to limit a quantity of displacements in the focusing direction at high accuracy.

(Second Embodiment)
In the first embodiment, the top surface portion 9b of the collision preventive member 9 is formed to tilt, so that it continuously varies from the vicinity of the innermost radius to the vicinity of the outermost radius in the information recording region of the optical disc 50. In the second embodiment, as is shown in FIG. 6, the collision preventive member 9 is provided with a step portion on the top surface portion 9b. Referring to FIG. 6, a state where the optical head 15 is present within the first region A1 is indicated by a virtual line, and a state where the optical head 15 is present within the second region A2 is indicated by a solid line.

On the top surface portion 9b of the collision preventive member 9, the step portion is provided at the boundary of the first limiting portion 9f and the second limiting portion 9g. The step portion is located at the boundary of the first region A1 and the second region A2.

The first limiting portion 9g is located on the outer radius side from the step portion, and the second limiting portion 9g is located on the inner radius side from the step portion. The first limiting portion 9f and the second limiting portion 9g are bonded in the shape of a step, while the first limiting portion 9f is located at a position closer to the optical disc 50 than the second limiting portion 9g.

In short, in the second embodiment, the limiting member has the first limiting portion and the second limiting portion that are formed in the shape of a step.

Even when the position of a portion on the inner radius side in the vicinity of the innermost radius alone is changed on the top surface portion 9b of the collision preventive member 9 in this manner, it is still possible to achieve the same advantages as those achieved in the first embodiment.

(Third Embodiment)
FIG. 7 is a view schematically showing a third embodiment of the invention. Referring to FIG. 7, a state where the optical head 15 is present within the first region A1 is indicated by a virtual line, and a state where the optical head 15 is present within the second region A2 is indicated by a solid line.

As is shown in the drawing, in the third embodiment, the collision preventive member 9 is configured in such a manner that the first limiting portion 9f is superimposed on the second limiting portion 9g. To be more specific, the first limiting portion 9f is extended from the first region A1 to a region including the second region A2. The first limiting portion 9f is provided parallel to the reference surface of the optical disc 50. Meanwhile, the second limiting portion 9g is provided in the second region A2 alone, and lies beneath the bottom surface of the first limiting portion 9f in a portion corresponding to the first region A1. Consequently, a quantity of displacements of the lens holder 2 is smaller in the second region A2 than in the first region A1.

As has been described, in the optical disc driving device according to the third embodiment, the first limiting portion extends from the first region to the second region, while the second limiting portion is laid beneath the first limiting portion in the second region.

When configured in this manner, the second limiting portion 9g functions when the optical head 15 is located in the vicinity of the innermost radius, and the same advantages as those achieved in the third embodiment can be achieved.

(Fourth Embodiment)
FIG. 8 is a view schematically showing a fourth embodiment of the invention. FIG. 9 is a perspective view of the fourth embodiment. Referring to FIG. 8, a state where the optical head 15 is present within the first region A1 is indicated by a virtual line, and a state where the optical head 15 is present within the second region A2 is indicated by a solid line. The first limiting portion 9f is not shown in FIG. 9.

In the fourth embodiment, the first limiting portion 9f is supported on the optical base 10, while the second limiting portion 9g is fixed to the supporting portions 22b of the guiding shafts 23. In short, the second limiting portion 9b is supported on the traverse base 22.

The first limiting portion 9f is formed in the shape of a cover to cover the optical head 15, and as is shown in FIG. 8, the first limiting portion 9f is provided with a through-hole 9h large enough for the protruding portion 2f of the lens holder 2 to penetrate through and too small for the main body portion 2e to penetrate through.

Because the first limiting portion 9f is fixed to the optical base 10, it is allowed to move integrally with the optical base 10 between the first region A1 and the second region A2.

The second limiting portion 9g is provided to the top end portion of a protruding member 63 that protrudes upward from the supporting portions 22b of the guiding shafts 23. The second limiting portion 9g is formed in the shape of a protrusion extending from the top end in the tracking direction T. The second limiting portion 9g is provided within the second region A2 alone, and is allowed to penetrate through the through-hole made in the side wall 9c of the collision preventive member 9. The second limiting portion 9g limits upward displacements as it engages with the top surface portion of the main body portion 2e of the lens holder 2 present within the second region A2.

As has been described, in the fourth embodiment, the base, the optical base formed to be movable in the tracking direction with respect to the base and provided with the objective lens are provided, and the second limiting portion is supported on the base and provided in the second region alone.

The first limiting portion is provided to the optical base, and is configured to move integrally with the optical base between the first region and the second region.

When configured in this manner, too, the second limiting portion functions when the optical head is located in the vicinity of the innermost radius, and the same advantages as those achieved in the first embodiment can be achieved.

As is shown in FIG. 10, an extension portion having a through-hole 2h may be provided to the lower end of the main body portion 2e of the lens holder 2, so that the second limiting portion 9g is allowed to penetrate through the through-hole 2h made in the extension portion. When configured in this manner, the second limiting portion 9g limits upward displacements as it engages with the bottom surface of the through-hole 2h.

As is shown in FIG. 11, the second limiting portion 9g may be fixed to the top surface portion of a stator 21b of the spindle motor 21. In other words, the base, the optical base formed to be movable in the tracking direction with respect to the base and provided with the objective lens, and the spindle motor fixed to the base and used to rotate the optical disc may be provided, and the second limiting portion may be fixed to the stator of the spindle motor. In this case, the first limiting portion may be provided to the optical base, so that it moves integrally with the optical base between the first region and the second region. Alternatively, the first limiting portion may be supported on the base.

(Fifth Embodiment)
FIG. 12 is a view schematically showing a fifth embodiment of the invention. Referring to FIG. 12, a state where the optical head 15 is present within the first region A1 is indicated by a virtual line, and a state where the optical head 15 is present within the second region A2 is indicated by a solid line.

As is shown in the drawing, in the fifth embodiment, the first limiting portion 9f is configured in the same manner as in the fourth embodiment, while the second limiting portion 9g is configured differently from the fourth embodiment, and is fixed to the turn table 20.

The second limiting portion 9g is shaped like a collar extended outward in the radius direction from the turn table 20, and the outside end portion is formed in a size that can be engaged with the main body portion 2e of the lens holder 2 present within the first region A1.

As has been described, in the fifth embodiment, the base, the optical base formed to be movable in the tracking direction with respect to the base and provided with the objective lens, and the turn table provided to the base and used to rotate the optical disc are provided, and the second limiting portion is fixed to the turn table. In this case, the first limiting portion may be provided to the optical base, and may be configured to move integrally with the optical base between the first region and the second region.

When configured in this manner, because the second limiting portion 9g is fixed to the turn table that forms the reference surface of the optical disc, it is possible to improve the position accuracy of the second limiting portion 9g.

A through-hole may be provided in the protruding portion 2f of the lens holder 2, so that the second limiting portion 9g engages with the through-hole made in the protrusion portion 2f.

### INDUSTRIAL APPLICABILITY

As has been described, the invention is applicable to a portable device and an optical disc driving device installed in a vehicle that are susceptible to vibrations from the outside.

## Claims

1. An optical disc driving device including an objective lens that collets light onto an optical disc, in which the objective lens is formed to be movable in a tracking direction of the optical disc across a first region and a second region inside the first region and to be movable in a focusing direction, the optical disc driving device being **characterized in that**:
a limiting member that limits displacements of the objective lens in the focusing direction is provided;
the limiting member includes a first limiting portion that limits displacements of the objective lens present within the first region while allowing a movable range of the objective lens in the focusing direction to overlap a deflection range of the optical disc within the first region, and a second limiting portion that limits displacements of the objective lens present within the second region in establishing a relation such that the movable range of the objective lens in the focusing direction does not overlap the deflection range of the optical disc within the second region; and
a controller that controls the objective lens in such a manner that the objective lens is located within the second region in a non-focusing state of the objective lens.

2. The optical disc driving device according to Claim 1, wherein:
the limiting member is configured to limit displacements of the objective lens in such a manner that the movable range of the objective lens in the second region is smaller than the movable range of the objective lens in the first region.

3. The optical disc driving device according to Claim 2, wherein:
the limiting member tilts with respect to a direction orthogonal to a rotational axis of the optical disc with an increasing distance from the optical disc on an inner side in the tracking direction.

4. The optical disc driving device according to Claim 2, wherein:
the limiting member has the first limiting portion and the second limiting portion that are formed in a shape of a step.

5. The optical disc driving device according to Claim 2, wherein:
the first limiting portion extends from the first region to the second region; and
the second limiting portion is laid beneath the first limiting portion within the second region.

6. The optical disc driving device according to any one of Claims 1 to 5, further including:
a base;
an optical base formed to be movable in the tracking direction with respect to the base and provided with the objective lens; and
a guiding shaft provided to the base to guide the optical base in the tracking direction,
wherein the limiting member is supported on the guiding shaft.

7. The optical disc driving device according to any one of Claims 1 to 5, further including:
a base; and
an optical base formed to be movable in the tracking direction with respect to the base and provided with the objective lens,
wherein the second limiting portion is supported on the base and provided in the second region alone.

8. The optical disc driving device according to Claim 7, wherein:
the first limiting portion is provided to the optical base, and is configured to move integrally with the optical base between the first region and the second region.

9. The optical disc driving device according to any one of Claims 1 to 5, further including:
a base;
an optical base formed to be movable in the tracking direction with respect to the base and provided with the objective lens; and
a spindle motor fixed to the base and used to rotate the optical disc,
wherein the second limiting portion is fixed to a stator of the spindle motor.

10. The optical disc driving device according to Claim 9, wherein:
the first limiting portion is provided to the optical base, and is configured to move integrally with the optical base between the first region and the second region.

11. The optical disc driving device according to any one of Claims 1 to 5, further including:
a base;
an optical base formed to be movable in the tracking direction with respect to the base and provided with the objective lens; and
a turn table provided to the base and used to rotate the optical disc,
wherein the second limiting portion is fixed to the turn table.

12. The optical disc driving device according to Claim 11, wherein:
the first limiting portion is provided to the optical base, and is configured to move integrally with the optical base between the first region and the second region.
